# EUROPEAN PATENT SPECIFICATION

(11) **EP 2 331 484 B1**
(45) Date of publication and mention of the grant of the patent: **15.05.2019**
(21) Application number: 09818681.0
(22) Date of filing: 07.10.2009
(51) Int. Cl.: C05D 9/00, C03C 3/076, C03C 3/06, C08K 3/40

(54) **SILICON-CONTAINING GLASS POWDER PARTICLES TO IMPROVE PLANT GROWTH**
SILICIUMHALTIGE GLASPULVERZUSAMMENSETZUNGEN ZUR VERBESSERUNG DES PFLANZENWACHSTUMS
PARTICULES DE POUDRE DE VERRE CONTENANT DU SILICIUM POUR AMÉLIORER LA CROISSANCE DE PLANTES

(30) Priority: 08.10.2008 AU 2008905218
(43) Date of publication of application: 15.06.2011
(73) Proprietor: SILICON FERTILISERS PTY LTD, Belrose NSW 2085 (AU)
(72) Inventor: ARCHER, David, Wilsonton, Toowoomba, Queensland 4350, (AU)
(74) Representative: Regimbeau
(86) International application number: PCT/AU2009/001328
(87) International publication number: WO 2010/040176

(56) References cited:
- WO-A1-92/09536
- WO-A1-96/23587
- WO-A1-03/018495
- WO-A1-03/082358
- WO-A2-03/059060
- FR-A1- 2 591 423
- FR-A1- 2 682 556
- GB-A- 756 332
- GB-A- 823 216
- JP-A- 4 267 817
- US-A- 5 037 470
- MOLLER ET AL.: 'Crushed Glass Cullet Replacement of Sand in Topsoil Mixes' FINAL REPORT PREPARED FOR CWC, DIVISION OF THE PACIFIC NORTH WEST ECONOMIC REGION, [Online] February 1998, 2200 ALASKAN WAY, SUITE 460, SEATTLE, WASHINGTON, 98121, XP008145999 Retrieved from the Internet: <URL:http://www.cwc.org/glass/g19710rpt.pdf >
- CARTON ET AL.: 'Testing the Use of Glass as a.Hydroponic Rooting Medium' FINAL REPORT PREPARED FOR RECYCLING TECHNOLOGY ASSISTANCE PARTNERSHIP (RETAP), DIVISION OF THE PACIFIC NORTH WEST ECONOMIC REGION January 1996, 2200 ALASKAN WAY, SUITE 460, SEATTLE, WASHINGTON, 98104, XP008146002
- FAY V. TOOLEY ET AL. THE HANDBOOK OF GLASS MANUFACTURE vol. I, 1974, XP002036891

## Description

This application claims priority from Australian Provisional Application No. 2008905218.

### FIELD OF THE INVENTION

In general the present invention relates to a method of providing plant available silicon to a plant growth medium or a plant using silicon-containing glass powder particles suitable for such use. The present description also relates to a method for producing these particles,a method of improving plant growth and a method of improving plant yield which include applying the particles described in the present description to the plant or plant growth medium.

### BACKGROUND TO THE INVENTION

Silicon is an important part of plant cell walls and plays a similar role to lignin in plant cell walls. Specifically silicon in cell walls provides compression resistance and rigidity and is thus important in providing structural strength to the plant. For example it has been reported that an adequate supply of silicon in the soil can significantly reduce the incidence of drooping or lodging in grass crops and provide improved mechanical strength. Thus, for example, adequate silicon levels in soil are important to improve the ability of cereal crops such as wheat, oats and barley to withstand damage caused by high winds which may cause the plants to lay flat. This is a particular problem with cereal crops as if the crop is too flat it is unable to be harvested using mechanical harvesters and the crop is thus lost.

The improved rigidity of cells provided by adequate soil silicon also tends to lead to crops having a more erect habit which ultimately results in better light absorption by the plant and higher photosynthetic efficiency. This in turn typically leads to a higher yield of the desired crop from the plant. The erect habit also tends to make plants less susceptible to wind and rain damage.

It has also been shown that plants growing in soil with adequate plant available silicon are also less susceptible to insect damage. Without wishing to be bound by theory it is thought the silicon levels in the plant provide protection in the form of a shield against insect attack as it reduces the capability of insects to eat the foliage. It is considered that insects find foliage with high levels of silicon unpalatable as it damages their mandibles thus reducing the opportunity for the insect to attack the plant. In addition silicon has been shown to assist drought affected crops as the plant is stronger and is less disposed to wilting. Further, adequate silicon levels available to a plant increase the ability of the plant to take up various nutrients, particularly potassium and phosphorous. Accordingly it is clear that providing growing plants with plant available silicon has numerous advantages.

This is particularly so under high leaching conditions such as in the wet tropic soils which undergo significant leaching of all leachable materials from the soil including plant available silicon. When coupled with soil disturbances which form part of the usual cropping regime along with fertilizer application this can lead in many instances to a loss of plant available silicon and a decline in the ability of the plant to obtain access to essential plant nutrients and the required level of plant available silicon.

This problem is particularly true, for example, of most cane growing areas and can equally apply to areas where rice is grown. Both of these crops have high demands for plant available silicon and any silicon deficiency in soil can lead to significant yield reductions.

There is therefore a need to provide materials containing plant available silicon in an economically effective manner so that these materials can be used as soil conditioning or soil "sweetening" agents that can be added to soils or other plant growth medium so as to provide plants with acceptable levels of plant available silicon. To date this process has been carried out by addition of silicon-containing materials such as calcium silicate slag, silicon manganese slag, potassium silicate and diatomite to soils in an attempt to provide the required levels of plant available silicon. These procedures have been carried out typically at application rates approaching 10 tonnes per acre. Notwithstanding this many of these approaches are typically not as effective as they could be as whilst these materials are typically high in total silicon they are not necessarily high in plant available silicon. In order to be an effective source the silicon-containing material must contain silicon in a form that is available to the plant typically, a soluble form of silicon such as mono silicic acid or poly silicic acid.

Accordingly in many instances whilst providing adequate total silicon levels these materials may not contain adequate amounts of plant available silicon. In addition many of the materials are expensive to produce, are not environmentally friendly and in many instances do not impart desirable properties onto the soil treated with the material. For example it is desirable that the material have a good cation exchange capacity.

The cation exchange capacity (CEC) of a soil refers to the amount of positively charged ions a soil can hold. When dissolved in water, plant nutrients are either positively charged or negatively charged. Examples of positively charged ions (cations) include: calcium (Ca⁺⁺), magnesium (Mg⁺⁺), potassium (K⁺), sodium (Na⁺), and ammonium (NH₄⁺). Soils with a high CEC will tend to hold on to nutrients better than soils with a low CEC and are thus far less amenable to nutrients being leached from the soil such as after rainfall or irrigation.

There is therefore a need to provide silicon-containing materials and methods of producing silicon-containing materials that can meet these needs.

One conventional method of producing a silicon-containing material is by the grinding of an appropriate silicon ore. These processes typically involve grinding of the ore to produce a powdered ore for further treatment. The powdered ore is then treated with alkali at elevated temperatures and with agitation to form sodium silicates. The sodium silicates thus formed are soluble in water and can therefore be separated in solution from other insoluble materials by filtration. Following filtration, the solutions are subjected to acidification whereby silica is produced as a precipitate which can then be recovered by filtration and drying using standard techniques. In general, it is observed that the silica produced using processes of this type typically has high levels of impurities leading to a limitation on the applications for which it can be used. The process requires significant capital expense and is thus both unattractive from an economic standpoint and from an environmental standpoint.

In relation to silicon-containing materials themselves there are currently very few materials that have been found to be effective in providing suitable levels of plant available silicon in a cost effective matter. Thus, for example, whilst some materials have been found that provide large amounts of plant available silicon a number of these are expensive and thus not suitable for use in large scale applications. In addition a number of materials provide plant available silicon but for reasons presently unknown these do not provide silicon in a form that can be taken up by plants.

WO 03/018495 relates to an antimicrobial silicate glass that may comprise various oxides (SiO₂, Na₂O, K₂O, P₂O₅, B₂O₃, CaO, AgO, ZnO, CuO, MgO, Al₂O₃ 0 to 7, CeO₂, Fe₂O₃.

GB 823 216 relates to vitreous compositions adapted to serve as a source of nutrients for plant growth. This document discloses a composition comprising a wide range of silica concentrations. Silicon dioxide, calcium oxide, potassium oxide, magnesium oxide, sodium oxide and P₂O₅ are materials which are considered as the matrix portion.

WO 03/082358 relates to the use of glass and/or glass ceramics in the form of powder and/or fibers for the control or release of ions from the glass.

WO 92/09536 discloses a mineral fiber composition which is soluble in biological fluids and may contain SiO₂, CaO, MgO, Na₂O and K₂O, and aluminium and/or iron oxides as well as phosphorus oxide.

FR 2 591 423 discloses a glass for use in agriculture comprising, except for nitrogen, all the mineral elements essential to the nutrition of plants, i.e. SiO₂, P₂O₅, K₂O, CaO, MgO, SO₃, and S.

The applicants of the present invention have found that an acceptable material for use as a source of plant available silicon can be produced from glass, particularly soda lime glass. This can be achieved if the material is ground to a suitable particle size. Without wishing to be bound by theory it is felt that during glass manufacture the reaction of quartz with sodium carbonate leads to the formation of sodium silicate. When this is contacted with acidic aqueous solution (such as in the soil) hydrogen ions convert the sodium silicate to silicic acid which is water soluble. As such glass is thought to be able to provide a ready source of plant available silicon.

The use of ground or milled glass in such an application is particularly attractive as there is a large amount of waste glass generated in the world and this therefore potentially provides a cheap source of raw materials. As would be clear to a skilled worker in the field this is particularly attractive as the concept of utilising waste material such as glass to produce a source of plant available silicon has advantages as it provides a means of waste minimisation, reduction of carbon dioxide emissions and lower costs for the end user as the raw material costs are reduced.

### SUMMARY OF THE INVENTION

The applicants of the present invention have found that many of the materials available for providing plant available silicon are either relatively expensive and are therefore not cost effective when there is a requirement to use them on a large scale or do not provide high levels of plant available silicon leading to the need to use relatively large amounts of the material in order to provide the desired effect. As such in many instances higher levels of material are used than is required and, at the same time, require additional processing such as aerial spraying or the like leading to additional production costs. The present invention is defined by the claims.

In one aspect the present description relates to silicon-containing glass powder particles suitable for use as a source of plant available silicon, wherein the particles have a silica content of at least 50 wt% and a sodium oxide content of at least 2 wt%, and at least 90 wt% of the particles have a particle size of less than 200.0 µm. In one specific example at least 90 wt% of the particles have a particle size of less than 100.0 µm, in particular at least 90 wt% of the particles have a particle size of less than 37.0 µm. For example, the silicon-containing glass powder particles have a median particle size of from 1 nm to 37.0 µm, particularly the silicon-containing glass powder particles have a median particle size of from 200 nm to 37.0 µm, more particularly the silicon-containing glass powder particles have a median particle size of from 1 µm to 25.0 µm, and even more particularly the silicon-containing glass powder particles have a median particle size of from 8.0 µm to 25.0 µm. In another example, at least 50 wt% of the particles have a particle size of less than 20.0 µm.

The above silicon-containing glass powder particles typically have a silica content of at least 60 wt%. In particular, the particles have a silica content of at least 70 wt%.

The silicon-containing glass powder particles typically have a sodium oxide content of at least 5 wt%. In particular, the particles have a sodium oxide content of at least 10 wt%.

The above silicon-containing glass powder particles may have a silica content of between 65 wt% and 90 wt% and a sodium oxide content of between 2 wt% and 15 wt%.

The present description also relates to a process of making the particles as described above.

Accordingly in a further aspect, the description relates to a method of producing silicon-containing glass powder particles for use as a source of plant available silicon, the method including:
(a) providing silicon-containing glass having a silica content of at least 50 wt% and a sodium oxide concentration of at least 2 wt%; and
(b) milling the silicon-containing glass to produce silicon-containing glass powder particles, wherein at least 90 wt% of the particles have a particle size of less than 200.0 µm.

In one example at least 90 wt% of the particles produced have a particle size of less than 100 µm, particularly at least 90 wt% of the particles produced have a particle size of less than 37.0 µm. In some examples of the method the particles produced have a median particle size of from 1 nm to 37.0 µm, in particular the particles produced have a median particle size of from 200 nm to 37.0 µm and more particularly the particles produced have a median particle size of from 1 µm to 25.0 µm. In still other specific examples, the particles produced have a median particle size of from 8.0 µm to 25.0 µm. In other examples, at least 50 wt% of the particles produced have a particle size of less than 20.0 µm.

The glass used in the production of the silicon-containing glass powder particles typically has a silica content of at least 60 wt%. In some specific examples the glass has a silica content of at least 70 wt%.

The glass used in the production of the silicon-containing glass powder particles typically has a sodium oxide content of at least 5 wt%. In some specific examples the glass has a sodium oxide content of at least 10 wt%. In some particular cases the glass has a silica content of between 65 wt% and 90 wt% and a sodium oxide content of between 2 wt% and 15 wt%.

In some examples milling the silicon-containing glass includes subjecting the silicon-containing glass to milling in a mill selected from the group consisting of a ball mill and a jet mill. The milling procedure may include dissolving the material in high pressure, high temperature steam.

In some examples after milling the silicon-containing glass powder particles are washed with a wash solution. A number of wash solutions may be used, however, in some examples the wash solution contains a mineral acid.

The wash solution may contain a mineral acid the wash solution has a concentration of the mineral acid of at least 2 M. In some examples the wash solution has a concentration of the mineral acid of at least 4 M. In other examples where the wash solution contains a mineral acid the wash solution has a concentration of the mineral acid of at least 5 M.

In some examples of the method the mineral acid is hydrochloric acid.

The wash solution used may be at any suitable temperature with the temperature being chosen based on a number of variables such as the duration of washing, the solids density in the wash solution and the like. In some examples the wash solution is at a temperature of from 40 °C to 80 °C, for example the wash solution is at a temperature of about 60 °C. Whilst not considered quite as effective the wash solution can also be used at ambient temperature.

The particles may be washed for any period of time however it is typically found that the particles are washed for a period of from 4 to 12 hours.

As stated above the particles may be used as a source of plant available silicon.

The present invention provides a method of providing plant available silicon to a plant or plant growth medium the method including applying to the plant or plant growth medium silicon-containing glass powder particles containing amorphous silica having a silica content of at least 50 wt% and a sodium oxide content of at least 5 wt%, wherein at least 90 wt% of the particles have a particle size of less than 37.0 µm In some embodiments the silicon-containing glass powder particles have a median particle size of from 1 nm to 37.0 µm. In some embodiments the silicon-containing glass powder particles have a median particle size of from 200 nm to 37.0 µm. In some specific embodiments, the silicon-containing glass powder particles have a median particle size of from 1 µm to 25.0 µm. In some even more specific embodiments, the particles have a median particle size of from 8.0 µm to 25.0 µm. In some embodiments at least 50 wt% of the particles applied have a particle size of less than 20.0 µm.

In some embodiments of the method the silicon-containing glass powder particles have a silica content of at least 60 wt%. In some specific embodiments the silicon-containing glass powder particles have a silica content of at least 70 wt%.

In some specific embodiments the silicon-containing glass powder particles have a sodium oxide content of at least 10 wt%.

In some embodiments the plant growth medium is a soil. In other embodiments the plant growth medium is potting mix. In still other embodiments the plant growth medium is compost. In still other embodiments the plant growth medium is a soil-less medium as utilised in hydroponic systems.

In some embodiments the particles are applied at a rate of between 1 tonne per hectare and 1000 tonnes per hectare. In other embodiments the particles are applied at a rate of between 1 kg and 1000 kg per hectare.

The present description also relates to a method for improving plant growth including applying to a plant or plant growth medium silicon-containing glass powder particles as described above.

Accordingly, the present description relates to a method of improving plant growth including applying to a plant or plant growth medium silicon-containing glass powder particles having a silica content of at least 50 wt% and a sodium oxide content of at least 2 wt%, wherein at least 90 wt% of the particles have a particle size of less than 200.0 µm. In some specific examples at least 90 wt% of the particles applied have a particle size of less than 100.0 µm, in particular at least 90 wt% of the particles have a particle size of less than 37.0 µm. In some examples the silicon-containing glass powder particles have a median particle size of from 1 nm to 37.0 µm, particularly the silicon-containing glass powder particles have a median particle size of from 200 nm to 37.0 µm, more particularly the silicon-containing glass powder particles have a median particle size of from 1 µm and 25.0 µm, and even more particularly the particles have a median particle size of from 8.0 µm to 25.0 µm. In some examples at least 50 wt% of the particles applied have a particle size of less than 20.0 µm.

In such method the silicon-containing glass powder particles may have a silica content of at least 60 wt%. In some specific examples the silicon-containing glass powder particles have a silica content of at least 70 wt%.

In some examples of the method the silicon-containing glass powder particles have a sodium oxide content of at least 5 wt%. In some specific examples the silicon-containing glass powder particles have a sodium oxide content of at least 10 wt%.

In some specific examples of the method, the silicon-containing glass powder particles have a silica content of between 65 wt% and 90 wt% and a sodium oxide content of between 2 wt% and 15 wt%.

In some examples the plant growth medium is a soil, potting mix or compost. In still other examples the plant growth medium is a soil-less medium as utilised in hydroponic systems.

In some examples the particles are applied at a rate of between 1 tonne per hectare and 1000 tonnes per hectare. In other examples the particles are applied at a rate of between 1 kg and 1000 kg per hectare.

In some examples the particles are applied to the soil before sowing or the particles are applied to the soil after sowing but before the seeds have sprouted. In still other examples, the particles are applied after the seeds have been sown and after the seeds have sprouted. In still other examples the particles are applied to the seeds before the seeds are sown, and are thereby applied to the plant growth medium with the seeds. In some examples the particles are applied to the soil, the seeds, or the plant itself as an aqueous slurry or spray.

The present description also relates to a method of improving plant yield including applying to the plant or plant growth medium silicon-containing glass powder particles as described above.

Accordingly, the present description relates to a method of improving plant yield including applying to a plant or plant growth medium silicon-containing glass powder particles having a silica content of at least 50 wt% and a sodium oxide content of at least 2 wt%, wherein at least 90 wt% of the particles have a particle size of less than 200.0 µm, in particular at least 90 wt% of the particles applied have a particle size of less than 100.0 µm, more particularly at least 90 wt% of the particles have a particle size of less than 37.0 µm. In some examples the silicon-containing glass powder particles have a median particle size of from 1 nm to 37.0 µm, particularly the silicon-containing glass powder particles have a median particle size of from 200 nm to 37.0 µm, more particularly the silicon-containing glass powder particles have a median particle size of from 1 µm to 25.0 µm, even more particularly the particles have a median particle size of from 8.0 µm to 25.0 µm. In some examples at least 50 wt% of the particles applied have a particle size of less than 20.0 µm.

In some examples of the method the silicon-containing glass powder particles have a silica content of at least 60 wt%. In some specific examples the silicon-containing glass powder particles have a silica content of at least 70 wt%.

In some examples of the method the silicon-containing glass powder particles have a sodium oxide content of at least 5 wt%. In some specific examples the silicon-containing glass powder particles have a sodium oxide content of at least 10 wt%.

In some specific examples of the method, the silicon-containing glass powder particles have a silica content of between 65 wt% and 90 wt% and a sodium oxide content of between 2 wt% and 15 wt%.

In some examples the plant growth medium is a soil, potting mix or compost. In still other examples the plant growth medium is a soil-less medium as utilised in hydroponic systems.

In some examples the particles are applied at a rate of between 1 tonne per hectare and 1000 tonnes per hectare. In other examples the particles are applied at a rate of between 1 kg and 1000 kg per hectare.

In some examples the particles are applied to the soil before sowing or the particles are applied to the soil after sowing but before the seeds have sprouted. In still other examples, the particles are applied after the seeds have been sown and after the seeds have sprouted. In still other examples the particles are applied to the seeds before the seeds are sown, and are thereby applied to the plant growth medium with the seeds. In some examples the particles are applied to the soil, the seeds, or the plant itself as an aqueous slurry or spray.

### BRIEF DESCRIPTION OF THE FIGURES

**Figure 1** shows a summary of particle size distribution of two samples of particles of the invention with or without Sonication.
**Figure 2** gives a summary of cumulative particle size distribution of two samples of particles of the invention with or without Sonication.
**Figure 3** shows a photographic comparison of root formation between wheat treated with particles of the invention and conventionally cultivated wheat.
**Figure 4** shows a photographic comparison of root formation between plants treated with particles of the invention and conventionally cultivated plants.

### DETAILED DESCRIPTION OF THE INVENTION

As stated above the present description relates to silicon-containing glass particles which are useful as sources of plant available silicon. The particles may be added to a plant growth medium such as soil or they may be applied to a seed or cutting of the plant prior to sowing or applied as an aqueous solution or spray.

Particles and methods of the invention may be suitable for use with any plant for which it is desirable to improve plant growth or plant yield, or to provide a source of plant available silicon. Some examples of plants for which it may be desirable or advantageous to apply the particles of the invention include wheat, barley, tomato, strawberry, sweet corn, bean, chick pea and peanut. The particles may also be beneficial when applied to other cereal crops, trees, grasses, flowering plants, fruit crops, vegetable crops and nut-bearing trees and plants.

In the soil solution silicon is generally present as mono and poly silicic acids as well as in the form of complexes with inorganic and organic acids. Whilst it is the mono silicic acid component that is typically taken up by plants the term *"plant available silicon"* is meant to encompass all forms of silicon that can be taken up directly by plants (such as mono silicic acid) as well as those forms of silicon that are in equilibrium with silicic acid in the soil (such as poly silicic acid and other complexes).

The process converts silicon-containing glass into glass particles of a defined size and composition that may be used as a source of plant available silicon. The first step in the process is providing silicon-containing glass which is then subjected to the latter process steps of the method of the invention.

The silicon-containing glass that is provided may be of raw silicon-containing glass or may be of recycled silicon-containing glass or a combination thereof. A useful silicon-containing glass material is that may be subjected to the process of the invention is recycled glass known colloquially as cullet. This is desirable, as recycled glass is typically inexpensive and readily accessible in large quantities and is therefore a cheap starting material for use in the process of the invention. A typical recycled cullet composition for flint (clear) glass is as shown in Table 1:

**Table 1: Composition of Flint Glass**

| **Component** | **Wt % Composition** |
|---|---|
| SiO₂ | 72.42 |
| Na₂O | 13.64 |
| K₂O | 0.35 |
| CaO | 11.5 |
| MgO | 0.32 |
| BaO | 0.02 |
| Al₂O₃ | 1.44 |
| TiO₂ | 0.035 |
| Fe₂O₃ | 0.067 |
| Cr₂O₃ | 0.002 |
| SO₃ | 0.207 |

This is a typical composition across flint (clear), amber (brown) and green glass. The only major differences between the various colours is with amber Fe₂O₃ is 0.255 wt%, green Fe₂O₃ 0.294 wt%, amber Cr₂O₃ 0.026 wt% and green Cr₂O₃ 0.129 wt%.

In general, any glass having a silica content of 50 wt% or more is suitable for use with the invention.

As can be seen glass contains a high level of SiO₂ that is in an amorphous form. The process of the invention allows the glass material to be converted into glass particles containing amorphous silica which is useful for providing plant available silicon. It is found that the process of the invention is applicable to all silicon-containing glass types and colour components do not appear to cause any problems. This is particularly advantageous when applied to recycled glass as it means that there is no requirement for the different glass types (or colours) to be separated before subjecting them to the process of the invention.

The silicon-containing glass material that is provided for subjection to the remainder of the process may be in a large variety of shapes and conditions and the step of providing silicon-containing glass may merely require the desired amount of silicon-containing glass to be obtained. In many instances, however, due to the state of the received glass the step of providing silicon-containing glass may include a step of subjecting the silicon-containing glass to one or more pre-treatment steps to make it more amenable to subjection to the remainder of the process steps of the invention.

For example one suitable pre-treatment step may include a washing step to remove unwanted contaminants prior to milling of the silicon-containing glass. For example, it is desirable that the silicon-containing glass is washed with water to remove any grit and any other adventitious contaminants prior to milling. The utilisation of a washing step of this type typically leads to a greater purity of finished product and is particularly desirable where the silicon-containing glass is recycled glass as this material typically has high level of contaminants.

Of course, as will be appreciated by a skilled worker, in many instances the silicon-containing glass is of a sufficient quality that no advantage is gained from the washing step. In general, visual inspection of the material will readily determine whether a washing step will be beneficial.

Another possible pre-treatment step that may be utilised in the step of providing the silicon glass is a coarse grinding step. This may be beneficial when the silicon-containing glass used as the raw material in the process of the invention contains large particles and a coarse grinding step may allow for better control of the milling step utilised later in the invention. With certain sources of silicon-containing glass it may be found that the utilisation of a coarse grinding step and a milling step is more economically efficient than a single milling step. Once again as with washing the need for such a pre-treatment step will be able to be determined by a skilled worker in the field based on a visual inspection of the material to be subjected to the latter process steps of the invention.

Once the silicon-containing glass to be subjected to the process has been chosen and subjected to any pre-treatment steps as described above it is then ready for milling of the glass to produce glass powder particles having a silica content of at least 50 wt%, a sodium oxide content of at least 2 wt% and wherein at least 90 wt% of the particles have a particle size of less than 200.0 µm. In some examples the particle size of at least 90 wt% of the particles is further reduced to below 100.0 µm, in particular the particle size of at least 90 wt% of the particles is further reduced to below 37.0 µm. The applicant has found that certain properties such as the cation exchange capability and the amount of soluble silicon and other trace elements can be enhanced by reducing the particle size.

As used herein the term 'particle size" refers to the particle size of the individual particles as measured using an approach such as laser diffraction. Other approaches for the determination of particle size would be known to one having skill in the art. Particles of the invention may be of any shape. In some specific cases the particles are multifaceted particles.

The milling step may be carried out using any milling technology known in the art. The milling step may be carried out at the same location as any pre-treatment steps or the silicon-containing glass may be pre-treated at one location and then transported to a second location where the milling is carried out.

Examples of suitable milling equipment that may be used in the process of the invention include ball mills and jet mills. An advantage of the use of a ball mill is that the raw material glass may be either wet or dry and it is observed that wet milling leads to slightly improved milling outcomes.

If the milling equipment is a jet mill suitable process conditions are a feed rate of 10 kg - 5,000 kg/hour, with an air supply of 100psi. The feed rate will depend on the size of the equipment being used and can be as low as 10 kg per hour or up to tonnes per hour with larger equipment or multiple installations. If a jet mill is used the feed material must be clean and dry. In general with any piece of equipment that may be used in the milling process a skilled worker in the field once provided with the particle size distribution parameters described above can modify the running conditions of the equipment to provide glass particles having the appropriate particle size.

In some embodiments the milling procedure may include dissolving the material in high pressure, high temperature steam. Such steam-based treatment may be particularly effective for preparing particles having a particularly low particle size in the order of nanometers.

In certain embodiments of the invention after milling the glass particles are ready for use as a source of plant available silicon. In certain embodiments, however, the milled particles are subjected to a washing step.

Accordingly the glass powder particles are then typically contacted with a washing solution. The contacting step can be achieved by adding the washing solution to a washing chamber containing the glass powder particles, or, alternatively, by adding the glass powder particles to a washing chamber containing the washing solution. Of course, it is also possible that both the washing solution and the glass powder particles may be added to the washing chamber simultaneously. It is also possible that the contacting step may involve a number of sequential contacting steps where the glass powder particles are contacted with the washing solution a number of times. This will occur, for example, where there are a number of washing chambers with the material being treated being washed a number of times as it traverses from one chamber to the other leading to a final washed product.

A number of washing solutions may be used in the process of the invention. The washing solution typically contains an acid or an acid source. Without wishing to be bound by theory it is felt that this removes certain metallic contaminants from the glass and increases the level of plant available silicon. The acid may be an organic or an inorganic acid although it is typical that the acid is an inorganic acid such as a mineral acid. Suitable acids for use in the process of the invention include sulphuric acid, hydrochloric acid, and nitric acid. Hydrochloric acid is found to be particularly suitable.

The amount of washing solution utilised in the process will depend on the initial state of the glass and the design conditions of the process to be utilised (batch versus continuous flow). The amount of washing solution to be used in any process can be readily determined by a skilled addressee. It is typical, however, that the amount of washing solution should be used in excess. The washing solution may be used at any concentration level although it is found in the process that the lower the concentration of washing solution used, the more washing solution volume is required, leading to commercially unacceptable volumes of washing solution being required.

In principle, the temperature during the washing step is irrelevant as the process may be carried out any temperature at which the washing solution is a liquid. Thus for example the process may be carried out at room temperature. Typically, however, the process is carried out at elevated temperatures, as it is found that elevated temperatures increase the rate of the process. The temperature is therefore generally between about 40 °C and about 80 °C with a temperature of about 60 °C being suitable.

It is also found to be desirable that during the washing step, the glass powder particles are agitated to increase the interaction between the surface of the glass powder particles and the washing solution. The washing step may also be carried out at elevated pressures.

The duration of the washing step required will depend upon a number of factors such as the temperature during the step and the concentration of wash solution utilised. Typically, it is found that the higher the concentration of the wash solution and the higher the temperature of contacting, the shorter the duration need be. In general, however, the washing step is carried out for a period of from 4 to 12 hours. In one embodiment the washing step is carried out for about 8 hours.

The milling and washing process as described above is described as a single step process in which the glass particles are treated in a batch wise fashion. Thus with reference to the washing step, for example, the glass particles are contacted with a washing solution in a batch process wherein all the washing occurs in a single chamber. The process can, of course, be run as a multi-step process in which a number of contacting steps are carried out in series to produce the final glass particles. This can occur within the same reacting chamber or can occur where a number of washing chambers are linked in series. In a similar vein the milling step may be carried out in a single milling apparatus of the milling may include subjecting the glass particles to a number of milling apparatus wherein the particle size is being reduced each time until the desired particle size is achieved.

Following the washing step (if used), the glass particles are typically isolated using conventional techniques. A typical isolation procedure involves removal of the washing solution, washing of the glass particles with clean water, filtering the washed material and pressing of the semi-solid filter cake to remove excess moisture followed by drying.

The process as described above produces glass powder particles as described previously. These glass powder particles may be used as sources of plant available silicon according to the invention. In use the glass powder particles may be used in a format such as where the glass powder particles are added at the desired rate to the plant growth medium (typically soil) or they may be used in admixture with one or more other ingredients in a multi component mixture. Suitable other ingredients in such a multi-component mixture may include fertilisers, minerals, organic matter, pH adjusters, soil wetting agents, and the like. The amount of material to be added is typically at a rate of between 1 kg and 8 tonne per hectare.

Irrespective of whether the glass powder particles are used alone or as part of the blend they are typically utilised or spread using techniques well known in the art and the technique of choice will depend upon the particular application. As would be clear to a skilled addressee the procedure for spreading such a material on a broad acre sugar cane plantation would be different to the procedure utilised to spread the material in a suburban garden. In each instance a skilled addressee would readily be able to an appropriate application technique and level.

The invention will now be described with reference to the following examples:

### EXAMPLES

### Example 1 - Milling of glass

A sample of waste glass was obtained from a glass recycling supplier ground to an initial particle size of less than 5 mm. This was then washed with water to remove contaminants. The glass was dried and then subjected to milling in a jet mill. A 12 inch jet mill was used, the feed rate was 10 kg/hour, air supply was 100 psi at 200 cfm to produce fine glass particles. The material was then divided into two even amounts. One of the amounts was retained as a first pass sample and one of the two amounts was then resubjected to a second pass through the jet mill to produce a second pass product. The particle size analysis and the specific surface areas of the two glass particles thus produced are shown in Table 2.

Particle size distribution was determined using a Malvern Instruments Limited Mastersizer 200. Each sample was dispersed in water immediately prior to analysis. Ultrasonic dispersion was applied to one of the two sample sets as indicated during analysis.

Pore size and surface area analysis by nitrogen adsorption was carried out using a Micromeritics Instrument Corporation ASAP 200. The sample was evacuated at 120 °C for 24 hours to ensure that exposed surfaces were free of any adsorbed material. Following this period of gassing out, the sample was presented for analysis.

**Table 2 - Particle size parameters**

| **Parameter** | **No Sonication** | | **Sonicated** | |
|---|---|---|---|---|
| | **First Pass** | **Second pass** | **First Pass** | **Second pass** |
| **D₁₀ microns** | 2.31 µm | 1.94 µm | 1.82 µm | 1.62 µm |
| **D₅₀ microns** | 9.14 µm | 7.09 µm | 8.47 µm | 6.42 µm |
| **D₉₀ microns** | 19.97 µm | 14.81 µm | 19.76 µm | 14.47 µm |
| **Specific surface area** | 1.2 m²/cc | 1.440 m²/cc | 1.360 m²/cc | 1.610 m²/cc |

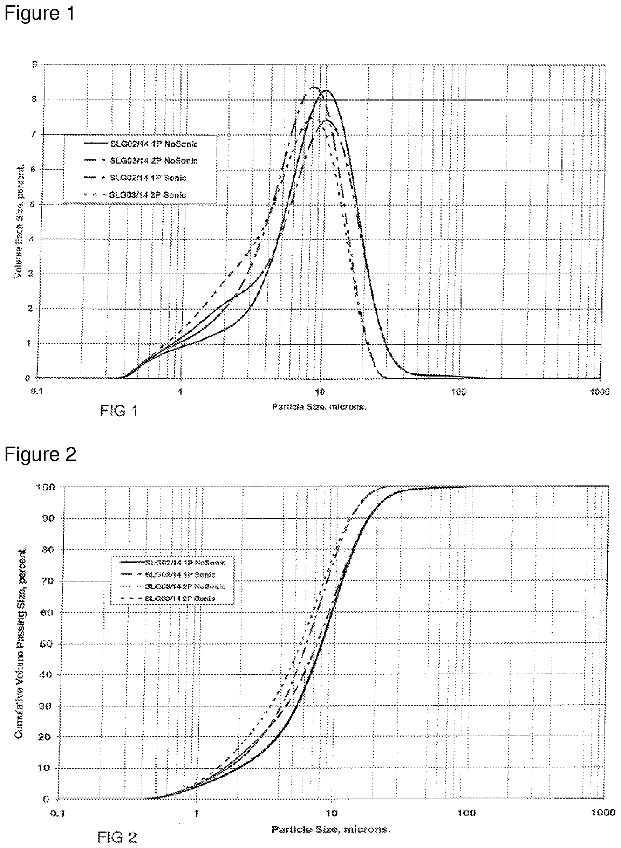

These results are shown graphically in Figures 1 and 2. The labels used in the figures can be correlated to the labels used in the above table as follows:

| | |
|---|---|
| No Sonication - First Pass | = SLG02/14 1P No Sonic |
| No Sonication - Second Pass | = SLG03/14 2P No Sonic |
| Sonication - First Pass | = SLG02/14 1P Sonic |
| Sonication - Second Pass | = SLG03/14 2P Sonic |

### Example 2 - Dry Jet Milling

A further sample was prepared by dry jet milling with no acid or other after-treatment. The particle size distribution was determined using a Malvern Instruments Limited Mastersizer 200. Each sample was dispersed in water immediately prior to analysis.

**Table 3 - Particle Size Parameters**

| **Parameter** | **Particles** |
|---|---|
| D₁₀ microns | 3.02 µm |
| D₅₀ microns | 15.88 µm |
| D₉₀ microns | 42.7 µm |
| Specific surface area | 0.8 m²/g |

### Example 3 - Milling and Acid Washing

A sample was milled in accordance with the single pass procedure in Example 1 and then subjected to a washing step with 1:1 hydrochloric acid at a temperature of 60°C for a period of 8 hours with gentle agitation. Upon completion of the washing step the sample was separated from the wash solution, washed with water to remove any residual acid and then dried to produce a milled, washed sample.

### Example 4 - Milling and Soxhlet Extraction

A sample was milled in accordance with the single pass procedure in Example 1 and then subjected to a washing step with in a Soxhlet extraction apparatus with 1:1 hydrochloric acid a period of 8 hours. Upon completion of the distillation step the sample was separated from the liquid, washed with water to remove any residual acid and then dried to produce a milled, Soxhlet extracted sample.

### Example 5 - Chemical Composition

The chemical composition of the glass particles produced in Examples 1 to 4 was determined using X- Ray fluorescence. The results are shown in Table 4.

**Table 4 - Chemical composition of Materials wt%**

| **Sample** | **SiO₂** | **TiO₂** | **Al₂O₃** | **Fe** | **MnO** | **MgO** | **CaO** | **Na₂O** | **K₂O** | **P₂O₅** |
|---|---|---|---|---|---|---|---|---|---|---|
| Ex 1 | 69.4 | 0.08 | 2.32 | 0.46 | 0.02 | 0.86 | 10.10 | 12.17 | 0.45 | 0.47 |
| Ex 2 | 72 | 0.07 | 1.66 | 0.4 | 0.02 | 0.41 | 11.4 | 12.8 | 0.43 | 0.05 |
| Ex 3 | 71.51 | 0.09 | 2.10 | 0.28 | 0.01 | 0.81 | 9.57 | 11.13 | 0.41 | 0.45 |
| Ex 4 | 67.02 | 0.08 | 2.08 | 0.29 | 0.01 | 0.82 | 8.51 | 9.42 | 0.36 | 0.42 |

As can be seen the samples all had comparable SiO₂ levels with the major difference being the leaching of calcium and sodium oxides.

### Example 6 - Levels of Plant available silicon

The samples of Examples 1 to 4 were then analysed to determine the plant available silicon levels. The results of the analysis are as shown in Table 5.

**Table 5 Plant available silicon.**

| **Sample** | **Level of available silicon mg/Kg** |
|---|---|
| Example 1 | **1440** |
| Example 2 | **2213** |
| Example 3 | **6410** |
| Example 4 | **2840** |

As can be seen the washed samples had significantly higher reading of plant available silicon.

### Example 7 - Silicon Uptake by Wheat

A plant growth trial was conducted to determine the ability of the materials of the invention to act as a source of available silicon. 12 soil trays with a size of 320 mm x 240 mm were filled with 3.47 kg of soil and each tray was seeded with 215 grams of seed quality wheat seed. The trays were then divided into 3 test groups and treated as follows:
**Group 1**: (4 Trays) This constituted the control group and no additives were used.
**Group 2**: (4 Trays) This constituted a group which was treated with diatomite at dose equivalents of 1, 3, 5 and 8 tonnes per hectare respectively.
**Group 3**: (4 Trays) This constituted a group which was treated with the material of example 1 at dose equivalents of 1, 3, 5 and 8 tonnes per hectare respectively.
All trays were watered by hand with a nutrient dose water supplied by Collmoore Fodder Pty Ltd. This nutrient water was used for the first 7 days and then tap water used as a replacement. The trays were stored at ambient conditions but placed so as to not be exposed to any rainfall.

Samples of plant tissue were taken from each tray at **21 days** and analysed for silicon levels. The results are shown in Table 6

**Table 6 Silicon Uptake in Wheat**

| **Sample** | **Silicon level %** |
|---|---|
| Control 1 | 0.14 |
| Control 2 | 0.11 |
| Control 3 | 0.054 |
| Control 4 | 0.11 |
| Diatomite 1 tonne/hectare | 0.11 |
| Diatomite 3 tonne/hectare | 0.14 |
| Diatomite 5 tonne/hectare | 0.082 |
| Diatomite 8 tonne/hectare | 0.15 |
| Example 1 material, 1 tonne/hectare | 0.61 |
| Example 1 material, 3 tonne/hectare | 0.42 |
| Example 1 material, 5 tonne/hectare | 0.51 |
| Example 1 material, 8 tonne/hectare | 0.58 |

The results clearly shown that the material of Example 1 acts as an excellent source of plant available silicon as silicon uptake with trays treated with this material was far greater than either the control or plants treated with the known silicon source diatomite.

### Example 8 - Cation Exchange Capacity for Glass Particles

Cation exchange capacity and plant available silicon were determined for the glass particles of Example 2.

**Table 7 - Cation Exchange Capacity for Glass Particles Including Plant Available Silicon**

| **Parameter** | *Value* | *Unit* |
|---|---|---|
| Calcium | 970 | mg/kg |
| Sodium | 1300 | mg/kg |
| Potassium | 93 | mg/kg |
| Aluminium | 0 | mg/kg |
| Magnesium | 39 | mg/kg |
| Exchangeable Calcium | 4.86 | meq/100 g |
| Exchangeable Sodium | 5.63 | meq/100 g |
| Exchangeable Potassium | 0.24 | meq/100 g |
| Exchangeable Magnesium | 0.33 | meq/100 g |
| Exchangeable Aluminium | 0 | meq/100 g |
| | | |
| **Cation Exchange** | **11.06** | **meq/ 100 g** |
| **Calcium/Magnesium Ratio** | **14.7** | |
| | | |
| Exchange Calcium | 43.9 | % |
| Exchange Sodium | 50.9 | % |
| Exchange Potassium | 2.2 | % |
| Exchange Magnesium | 3 | % |
| Exchange Aluminium | 0 | mg/kg |
| | | |
| ***Plant available Silicon*** | 2213 | mg/kg |

### Example 9 - Chemical Properties as a Function of Particle Size

Glass was milled to various particle sizes and the chemical properties of the resulting particles were analysed. The results are shown in Table 8.

**Table 8 - Cation Exchange Capacity for Glass Particles of the Invention and as a Raw Material as a Function of Particle Size**

| **Element / Property** | **Raw Stock 400-1500 µm Mean 683 µm** | **Raw Stock 0-400 µm Mean 377 µm** | **Raw Stock 0-200 µm Mean 112 µm** | **Particles of Invention 0.479-416 µm Mean 15 µm** | **Particles of Invention 0.417-100 µm Mean 8.65 µm** | **Particles of Invention 0.417-363 µm Mean 3.437 µm** | **Units** |
|---|---|---|---|---|---|---|---|
| Calcium | 292 | 510 | 840 | 1932 | 3595 | 3002 | ppm |
| Sodium | 34 | 51 | 340 | 2288 | 8820 | 14040 | ppm |
| Potassium | 145 | 290 | 130 | 266 | 439 | 840 | ppm |
| Magnesium | 27 | 38 | 110 | 77 | 124 | 156 | ppm |
| Exchangeable Calcium | 1.47 | 2.57 | 4.22 | 9.66 | 17.98 | 15.01 | meq / 100g |
| Exchangeable Sodium | 0.145 | 0.22 | 1.47 | 9.95 | 38.35 | 61.02 | meq / 100g |
| Exchangeable Potassium | 0.0375 | 0.75 | 0.33 | 0.68 | 1.13 | 2.15 | meq / 100g |
| Exchangeable Magnesium | 0.225 | 0.32 | 0.92 | 0.65 | 1.03 | 1.3 | meq / 100g |
| Cation Exchange | 2.22 | 3.86 | 6.94 | 20.94 | 54.48 | 79.49 | meq / 100g |
| Calcium / Magnesium Ratio | 5.45 | 8 | 4.6 | 14.97 | 17.43 | 11.53 | % |
| Exchange Calcium | 66.05 | 66.6 | 60.8 | 46.1 | 30.7 | 18.9 | % |
| Exchange Sodium | 8.9 | 5.7 | 21.2 | 47.5 | 65.6 | 76.8 | % |
| Exchange Potassium | 9.7 | 19.4 | 4.8 | 3.3 | 1.9 | 2.7 | % |
| Exchange Magnesium | 15.35 | 8.3 | 13.3 | 3.1 | 1.8 | 1.6 | % |
| Soluble Silicon | 0.1 | 0.1 | 336 | 8143 | 26194 | 42125 | ppm |

It is evident that with a decrease in the particle size a number of the properties are enhanced. Of particular note are the amounts of exchangeable calcium, sodium, magnesium and potassium, and the cation exchange capacity.

### Example 10 - Barley Trials (I)

Mass planting of barley seed was done in clear pots 150 mm x 120 mm x 200 mm deep. 40 grams of seed was used for each pot. Growing medium was a commercial seed raising mix. All seeds were planted at the same depth

Four pots were planted:
- LT 1 Control plus 10 ml/litre of a fish-based nitrogen fertiliser
- LT 2 Control, no additives
- LT 4 Glass Particles added at the rate of 4 grams
- LT 6 Glass Particles added at the rate of 4 grams, plus 10 ml/litre of fertiliser

Samples LT4 and LT6 were the first to germinate, two days before the controls. Both (particularly LT4) showed significantly greater root and leaf growth at harvesting. LT4 foliage growth was 120 mm high while the Control (LT2) was 90 mm high. Root system for LT4 was 80mm while the Control root system was 60 mm deep. Both potassium and phosphorous uptake were greater than the controls for both silicon treated samples.

### Control and LT4 root tissue

Plants were harvested 10 days after planting. Leaf tissue analysis was carried out and a summary of results follow:

**Table 9 - Leaf Tissue Analysis For Barley Trials LT1, LT2, LT4 and LT6**

| ***Element*** | **LT 1** | **LT 2** | **LT 4** | **LT 6** | **Units** |
|---|---|---|---|---|---|
| **Boron** | 7.8 | 7.3 | 9.8 | 8.2 | mg/kg |
| **Calcium** | 0.28 | 0.29 | 0.33 | 0.28 | % |
| **Copper** | 16 | 19 | 18 | 16 | mg/kg |
| **Iron** | 230 | 190 | 170 | 140 | mg/kg |
| **Potassium** | 2.97 | 3.36 | 4.23 | 4.47 | % |
| **Magnesium** | 0.31 | 0.33 | 0.35 | 0.32 | % |
| **Manganese** | 50 | 67 | 66 | 48 | mg/kg |
| **Sodium** | 0.14 | 0.16 | 0.17 | 0.15 | % |
| **Phosphorus** | 1.50 | 1.55 | 1.77 | 1.56 | % |
| **Sulphur** | 0.98 | 0.98 | 1.09 | 1.04 | % |
| **Zinc** | 70 | 67 | 60 | 64 | mg/kg |
| **Molybdenum** | 2.6 | 2.6 | 2.7 | 2.5 | mg/kg |
| **Nitrogen** | 7.5 | 6.1 | 5.8 | 6.7 | % |
| **Silicon** | 0.140 | 0.087 | 0.080 | 0.120 | % |

### Example 11 - Barley Trials (II)

Barley was planted to two clear pots used previously and to a rectangular (window) type tray. 40 grams of seed was used for each pot. The growing medium was soil (ex Deniliquin, NSW). Samples were capped with soil screened through a 230 mm sieve. Soil was sent for CEC analysis (XP9). All seeds were planted to the same depth.

Three samples were planted:
- LT8 Control, no additives
- LT9 Glass Particles added at rate of 100 grams
- LT10 Glass Particles added at rate of 6 grams

There appeared to be little difference between the control and treated samples insofar as plant emergence, although LT9 and LT10 demonstrated superior growth. The tissue analysis shows a large difference in sodium uptake between the three samples.

**Table 10 - Leaf Tissue Analysis Barley Trials**

| ***Element*** | **LT 8** | **LT 9** | **LT 10** | **Units** |
|---|---|---|---|---|
| **Boron** | 63 | 28 | 22 | mg/kg |
| **Calcium** | 0.6 | 0.62 | 0.58 | % |
| **Copper** | 18 | 15 | 18 | mg/kg |
| **Iron** | 230 | 230 | 190 | mg/kg |
| **Potassium** | 3.45 | 2.84 | 2.92 | % |
| **Magnesium** | 0.45 | 0.47 | 0.44 | % |
| **Manganese** | 83 | 84 | 72 | mg/kg |
| **Sodium** | 0.85 | 0.33 | 0.41 | % |
| **Phosphorus** | 1 | 1.12 | 0.8 | % |
| **Sulphur** | 1.06 | 0.93 | 0.84 | % |
| **Zinc** | 100 | 85 | 88 | mg/kg |
| **Molybdenum** | 4.1 | 3.8 | 3.8 | mg/kg |
| **Nitrogen** | 3.6 | 3.7 | 3.9 | % |
| **Silicon** | 0.73 | 0.73 | 0.47 | % |

### Example 12 - Barley Trials (III)

Three clear pots were sown with barley seed. 40 grams of seed was used for each pot. Growing medium was a commercial seed raising mix. All seeds were planted to the same depth.

Three samples were planted:
- LT16 Control, no additives
- LT19 Control, one addition of a (retail) NPK fertiliser
- LT21 10 grams of Glass Particles added, one addition of a (retail) NPK fertiliser

LT19 and LT21 were re-dosed with the NPK fertiliser at 7 days.

After three days LT16 seeds had not emerged. LT19 and LT21 seeds were emerging. Root growth of the Control was 70 mm, Control plus NPK was 60 mm and Glass Particles plus NPK was 90 mm. Leaf tissue analysis was conducted after 24 days. Phosphorous uptake was greater than the control for both silicon treated samples.

**Table 11 - Leaf Tissue Analysis for Barley LT16, LT19 AND LT21**

| **Element** | **LT16** | **LT19** | **LT21** | **Units** |
|---|---|---|---|---|
| **Nitrogen** | 4.1 | 5.0 | 5.3 | % |
| **Silicon** | 0.16 | 0.18 | 0.19 | % |
| **Phosphorus** | 1.48 | 1.77 | 1.85 | % |
| **Potassium** | 5.27 | 5.13 | 5.69 | % |
| **Calcium** | 0.76 | 0.73 | 0.74 | % |
| **Magnesium** | 0.39 | 0.36 | 0.37 | % |
| **Sodium** | 0.48 | 0.44 | 0.52 | % |
| **Sulphur** | 0.63 | 0.67 | 0.68 | % |
| **Zinc** | 59 | 56 | 55 | mg/kg |
| **Iron** | 150 | 150 | 180 | mg/kg |
| **Copper** | 15 | 16 | 16 | mg/kg |
| **Manganese** | 47 | 44 | 46 | mg/kg |
| **Boron** | 9.1 | 9.3 | 9.9 | mg/kg |
| **Molybdenum** | 3.0 | 2.3 | 2.5 | mg/kg |

### Example 13 - Tomato Trials

Tomatoes (Grosse Lisse) were planted into clear pots, 150 mm x 120 mm x 200 mm deep. Two seeds were sown to each pot. Growing medium was a commercial seed raising mix. All seeds were planted at the same depth.

Three pots were planted:
- LT 11 Control, no additives
- LT 12 Glass Particles added at 40 mg per seed, 10% CaO added
- LT 13 Glass Particles added at 40 mg per seed

Samples LT12 and LT13 emerged two days before the control. Samples LT12 and LT13 continued to show significant growth over and above the control up to time of harvesting. The samples were harvested at 37 days after planting. Leaf tissue analysis was conducted on the samples. Both phosphorous and potassium uptake was greater than the control for both silicon treated samples.

**Table 12 - Leaf Tissue Analysis for Tomato Trials, LT11, LT12 and LT13.**

| ***Element*** | **LT 11** | **LT 12** | **LT 13** | **Units** |
|---|---|---|---|---|
| **Boron** | 38 | 37 | 37 | mg/kg |
| **Calcium** | 1.31 | 1.53 | 1.5 | % |
| **Copper** | 8.8 | 10 | 12 | mg/kg |
| **Iron** | 130 | 120 | 120 | mg/kg |
| **Potassium** | 3.45 | 4.31 | 4.81 | % |
| **Magnesium** | 0.71 | 0.78 | 0.71 | % |
| **Manganese** | 25 | 23 | 23 | mg/kg |
| **Sodium** | 0.26 | 0.27 | 0.28 | % |
| **Phosphorus** | 0.64 | 0.68 | 0.77 | % |
| **Sulphur** | 0.98 | 1.13 | 1.06 | % |
| **Zinc** | 42 | 53 | 62 | mg/kg |
| **Molybdenum** | 0.38 | 0.42 | 0.52 | mg/kg |
| **Nitrogen** | 1.8 | 2 | 2.1 | % |
| **Silicon** | 0.17 | 0.16 | 0.15 | % |

### Example 14 - Corn Trials

Two rectangular trays were sown with corn. 40 grams of seed was used for each tray. Growing medium was seed raising mix. All seeds were planted to the same depth. The treated seeds emerged one day before the control. Both samples were dosed with a nitrogen fertiliser at 10 ml/litre after 18 days and harvested on two days later. Leaf tissue analysis was conducted on the samples. A significant increase in both zinc and potassium uptake was noted with the silicon source treated sample.

Two samples were planted:
- LT 14 Control, no additives
- LT 15 Glass Particles added at rate of 1 gram per seed

**Table 13 - Leaf Tissue Analysis for Corn LT14 - LT15**

| ***Element*** | **LT14** | **LT 15** | **Units** |
|---|---|---|---|
| **Boron** | 14 | 10 | mg/kg |
| **Calcium** | 0.35 | 0.38 | % |
| **Copper** | 14 | 17 | mg/kg |
| **Iron** | 170 | 160 | mg/kg |
| **Potassium** | 4.62 | 5.74 | % |
| **Magnesium** | 0.29 | 0.31 | % |
| **Manganese** | 48 | 20 | mg/kg |
| **Sodium** | 0.052 | 0.057 | % |
| **Phosphorus** | 1.11 | 1.04 | % |
| **Sulphur** | 0.36 | 0.40 | % |
| **Zinc** | 100 | 220 | mg/kg |
| **Molybdenum** | 0.30 | 0.38 | mg/kg |
| **Nitrogen** | 3.9 | 4.1 | % |
| **Silicon** | 0.012 | 0.009 | % |

### Example 15 - Bean Trials

Six trial plots of beans were planted at Allora (Qld). Further trial plots were planted approximately four weeks later. Each plot was sampled approximately two months after sowing.

Each plot was 0.36 ha and two varieties of bean were used, "Simba" and "First Mate". Two plots were controls, two plots were treated with 2 and 4 kg of silicon by foliate application at "first flower" stage, and two further plots were treated with the silicon material applied as a side dressed soil addition.

All plots had 250 kg of an NPK fertiliser applied as a base dressing at planting and a further 250 kg of sulphate of ammonia ("granam") was applied as a side dressing at flower initiation.

The crop was harvested at 58 days. Leaf tissue samples were taken on all trial plots and showed little difference in nutrient levels between all the samples. Whole bean samples were taken at the same time and sent for tissue analysis, and further samples were kept under refrigeration to test for shelf life. After three weeks the beans that had grown with a silicon additive were clearly fresher than the untreated beans.

Hand samples of fruit were also taken at harvest. 20 plants from each plot were sampled with marketable fruit selected. The results of this comparison showed that all plots treated with the silicon material had higher yields than the controls.

The yield results are shown in the following table.

**Table 14 - Yield Data from Bean Trials**

| **Sample ID** | **52 2K MS** | **52 4K MS** | **52 C1 MS Control** | **52 C2 MS Control** | **66 18K MS** | **64 12 KMS** |
|---|---|---|---|---|---|---|
| Bean Variety | First Mate | First Mate | First Mate | First Mate | First Mate | Simba |
| Silicon application rate per hectare | 2 kg foliate spray | 4 kg foliate spray | 0 | 0 | 18 kg soil | 12 kg soil |
| Weight of bean sample | 1.65 kg | 1.96 kg | 1.5 kg | 1.18 kg | 2.0 kg | 2.15 kg |

### Example 16 - Barley Trials with Yates "Thrive" soluble NPK fertiliser

This trial work was designed to test the efficiency of the silicon material as a partial replacement for a commercial NPK fertiliser ("Thrive") material. Five pots were sown: (i) one control; (ii) one trial with 4 grams of silicon material only; (iii) one pot with 8 grams of "Thrive"; (iv) one with 25% substitution and (v) one with a 50% substitution. The samples were harvested 17 days after sowing.

The results clearly indicate increased silicon uptake with the "Thrive" and silicon material combinations. The NPK uptake is similar for the treated samples as opposed to the straight "Thrive" with the exception of Nitrogen in the straight (8 grams Thrive) sample. It should be noted that the value of 8.1% nitrogen in this sample is over the values considered to be toxic to plant life and it appears that the silicon product has had a modifying effect with the other (mixed) samples. Leaf tissue and root growth of the combination samples was equivalent to the 8 gram "Thrive sample".

The results indicate that the silicon material can be used to replace up to 50 % of this NPK fertiliser.

**Table 15 - Leaf Tissue Analysis Glass Particles and "Thrive"**

| **Element** | **Control** | **Thrive (8 g)** | **Thrive (4 g) Particles (4 g)** | **Thrive (6g) Particles (2 g)** | **Particles (4 g)** |
|---|---|---|---|---|---|
| **Boron** | 2.1 | 3 | 3.6 | 4.3 | 2.4 |
| **Calcium** | 0.52 | 0.34 | 0.44 | 0.44 | 0.57 |
| **Copper** | 18 | 24 | 23 | 21 | 18 |
| **Iron** | 190 | 120 | 150 | 130 | 180 |
| **Potassium** | 6.13 | 5.11 | 3.39 | 5.88 | 5.92 |
| **Magnesium** | 0.33 | 0.26 | 0.29 | 0.28 | 0.35 |
| **Manganese** | 43 | 35 | 36 | 36 | 46 |
| **Sodium** | 0.5 | 0.4 | 0.5 | 0.5 | 0.5 |
| **Phosphorus** | 1.81 | 1.45 | 1.71 | 1.76 | 1.89 |
| **Sulphur** | 0.79 | 0.88 | 0.98 | 1.12 | 0.82 |
| **Zinc** | 96 | 73 | 81 | 77 | 96 |
| **Molybdenum** | 4.1 | 3.2 | 4 | 3.9 | 4.1 |
| **Nitrogen** | 4.3 | 8.1 | 6.7 | 6.6 | 4.4 |
| **Silicon** | 750 | 720 | 940 | 970 | 710 |

### Example 17 - Hydroponic Strawberry and Tomato

Trial work was conducted in the Deniliquin area located on the Deniliquin-Echuca Road. Strawberries ("Diamante") were grown in PVC pipes in a greenhouse and the nutrient solution was recirculated through the system.

A 15 metre section of the "Diamante" plants were treated with silicon containing particles of the invention by removing plants at approximately 1 metre spacing and placing 10 milligrams of the particles directly into the nutrient solution. The solution is trickle fed and is approximately 10-15mm deep. At the time the plants were in extremely poor condition with little new growth and extremely small fruit set.

The plants were inspected again two weeks later. The visual improvement in growth and fruit set was obvious and the plants exhibited extremely healthy leaf and fruit growth.

Further trial work was conducted by treating 330 new tomato plants with a soil amendment of 2-3 grams per plant.

During inspection of the facility after 2 months it was obvious that the treated plants were healthier than the untreated controls, and demonstrated a growth increase estimated at some 10-15%.

### Example 18 - Wheat trials, Allora

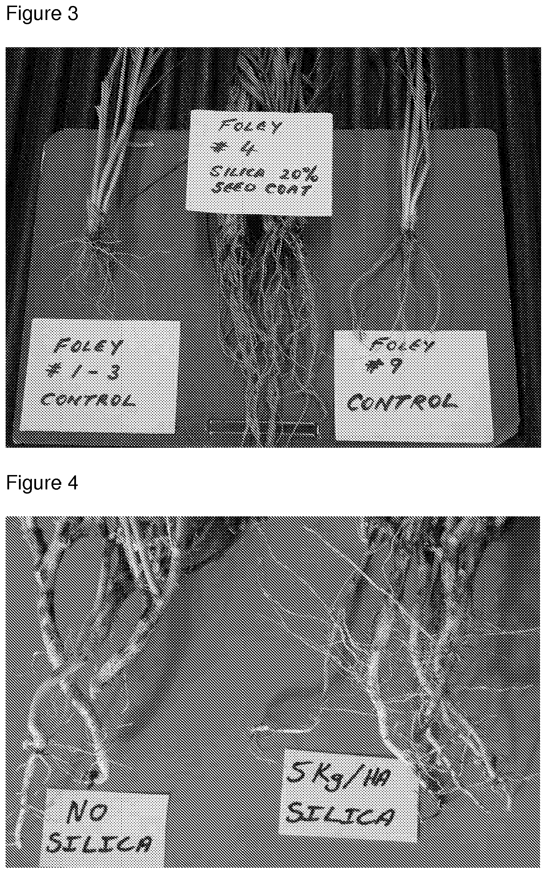

Plots of wheat (QULL 2000) were planted at Allora (QLD) using seed coated with either 10% or 20% of the silicon-containing particles of the invention. One hectare was planted as a control and a further two hectares were sown with seed coated with the particles of the invention: one hectare with seed coated with 10% of the particles and one with 20% of the particles. Soil analysis was conducted, which showed that the soil contained adequate levels of soluble silicon possibly due to bore irrigation. Subsequent inspection of this crop showed a major difference in root growth in the treated crops as demonstrated in the Figure 3.

The crop was harvested approximately four months after inspection of the root systems. Despite the indications of slower grain set and a significant increase in root growth with the crop the yield data indicated similar results for both the treated and untreated plots. The yield data may have been influenced by the relatively small areas involved in the trial, and it was noted that when using large header equipment, (as in this example) even a small deviation from track whilst harvesting could skew the results. Nevertheless the addition of particles of the invention did appear to have a substantial impact on root formation.

### Example 19 - Wheat and Chick Pea Trials

Silicon-containing particles of the invention were utilised as a soil amendment and foliar application with chick pea, wheat and barley in a number of crops in the Darling Downs area of southern Queensland.

Inspection of these crops after 3-4 months showed a major increase in root growth for the treated cereal crops (as well as slower maturity) and a large increase in nitrogen nodulation with the treated chickpea. Figure 4 shows the visual differences between the Control and treated plants.

### Example 20 - Peanut Trials, DPI Research Station, Kingaroy (QId)

Trial work was undertaken at Kingaroy using silicon containing particles of the invention as a foliar and soil application at 10 kg per hectare on a peanut crop.

The plants were sampled after three months and leaf tissue sent for analysis. Guidelines for Zinc content in leaf tissue of peanut plants recommend an upper limit of 60ppm; guidelines for Boron suggest it is one of the most important elements for peanut. The leaf tissue results (15) are shown in the table below:

**Table 16 - Leaf Tissue Analysis for Peanut Trials: Foliar and Soil Application**

| **Element** | **Units** | **Control** | **Glass Particles Foliar** | **Glass Particles Soil** |
|---|---|---|---|---|
| **Nitrogen** | % | 2.7 | 2.7 | 2.9 |
| **Phosphorus** | % | 0.7 | 0.23 | 0.26 |
| **Potassium** | % | 0.54 | 2.09 | 2.14 |
| **Calcium** | % | 0.91 | 0.02 | 0.02 |
| **Magnesium** | % | 0.2 | 0.1 | 0.11 |
| **Sodium** | % | 0.1 | 0.01 | 0.01 |
| **Sulphur** | % | 0.18 | 0.14 | 0.14 |
| **Zinc** | mg/kg | 350 | 15 | 17 |
| **Iron** | mg/kg | 290 | 56 | 49 |
| **Copper** | mg/kg | 22 | 6 | 5.8 |
| **Manganese** | mg/kg | 9.9 | 8.8 | 8.4 |
| **Boron** | mg/kg | 1.3 | 5.4 | 5.7 |
| **Molybdenum** | mg/kg | 0.77 | 0.01 | 0.01 |

Once again it appears that the use of particles of the invention have enabled the species to selectively uptake or reject critical elements. Sodium, Zinc and Boron levels vary considerably between the leaf tissue of the control plants and the leaf tissue of those plants treated with particles of the invention.

### Example 21 - Sweet Corn Trial

A sweet corn crop was planted and harvested after three-four months. The trial design consisted of side by side comparative strips. There were two conventional strips, one strip treated with a biofertiliser program, and one strip treated with a biofertiliser program and with silicon containing glass particles of the invention. Each strip consisted of at least 6 planted rows of corn approximately 400m long.

The fertiliser treatments were as follows:

### Conventional Program (C1 & C2)

a. Pre plant - Incitec 74079 @ 350kg/ha. Applied at planting.
b. Side dress - urea @ 200kg/ha. Applied after 23 days.

### Biofertiliser Program (B1)

a. Pre plant - Platinum 957 (Ausmin) @ 250kg/ha. Applied at planting.
b. Side dress - Biocoated urea @150kg/ha. Applied after 23 days.
c. Soil drench - Huma Base (Ausmin) @100l/ha + Biobrew Soil @30l/ha. Applied after planting.

### Biofertiliser + Silicon Containing Glass Particles Program (B2)

a. Silicon-containing Glass Particles as seed coating 10kg/ha
b. Pre plant - Platinum 957 (Ausmin) @ 250kg/ha. Applied at planting.
c. Side dress - Biocoated urea @ 150kg/ha. Applied after 23 days.
d. Soil drench - Huma Base (Ausmin) @ 100l/ha + Biobrew Soil @ 30l/ha. Applied after planting.

The biofertiliser programs had less major nutrients applied. The trial was designed to see if improved nutrient use efficiency (kg of yield per unit of nutrient applied) for the key nutrients of N, P and K could be achieved through the enhancement of biological activity with a biofertiliser and/or particles of the invention.

All treatments received an application of a pre-emergence herbicide (Dual Gold (metolochlor)). Conventional areas were also sprayed with an insecticide (chlorpyriphos) for insect pests. The biofertilized plots were not treated with the insecticide to avoid potential impacts of the chemical on the applied biological inoculants and on plant immunity status.

**Table 17 - Amounts of Nutrients Applied per Hectare for Each Treatment**

| **Nutrient** | **Kgs nutrient applied / ha** | | |
|---|---|---|---|
| | **Conventional (C1 & C2)** | **Biofertiliser 1 (B1)** | **Biofertiliser 2 (B2)** |
| **Nitrogen** | 113 | 96.5 | 96.5 |
| **Phosphorus** | 45 | 14.5 | 14.5 |
| **Potassium** | 38.5 | 18.5 | 18.5 |
| **Sulphur** | 28 | 12.5 | 12.5 |

**Table 18 - Total Nutrient Levels of Selected Nutrients in the Corn Cobs at Harvest.**

| **Nutrient** | **Unit** | **C1** | **C2** | **B1** | **B2** |
|---|---|---|---|---|---|
| N | % | 2.47 | 2.40 | 2.30 | 2.50 |
| P | % | 0.37 | 0.36 | 0.37 | 0.37 |
| K | % | 1.13 | 1.11 | 1.06 | 1.23 |
| S | % | 0.25 | 0.24 | 0.23 | 0.26 |
| C | % | 46.8 | 46.4 | 46.8 | 46.4 |
| Ca | % | 0.01 | 0.01 | 0.01 | 0.01 |
| Cu | ppm | 1.7 | 1.7 | 3.5 | 2.0 |
| Zn | ppm | 23 | 23 | 19 | 23 |
| Si | ppm | 57 | 57 | 110 | 82 |

Due to lodging of the crop by a storm just prior to harvest, an estimate of the yield per hectare was obtained by determining the number of cobs per linear meter. Assuming a planting width of 50cm and a strip length of 100m there would be 200 planted rows per hectare. This equates to 20 000 linear metres. The yield was then calculated as estimated number of cobs per hectare. Using the mean weight data collected per cob, a tonnage per hectare was also calculated. These figures are shown in Table 19.

**Table 19 - Yield calculations for Corn Trials**

| **Parameter** | **C1** | **C2** | **B1** | **B2** |
|---|---|---|---|---|
| **Mean # cobs / linear meter** | 3.23 | 3.30 | 3.42 | 3.59 |
| **Mean # cobs / hectare** | 64 600 | 66 000 | 68 400 | 71 800 |
| **Tonnes of cobs per hectare** | 26.16 | 28.38 | 29.41 | 30.87 |

The conventional treatments used three times as much P fertiliser per tonne of corn grown as compared to the biofertiliser treatments. The conventional treatments used over twice the amount of S and K fertiliser per tonne of corn grown when compared to the biofertiliser. Nitrogen required per tonne of corn grown was a quarter less in the biofertiliser treatments when compared to the conventional ones. Table 20 shows the NUE figures for the four key nutrients N, P, K and S.

**Table 20 - Nutrient use efficiency (NUE) figures for N, P, K and S (kg/tonne/hectare)**

| **Nutrient** | **C1** | **C2** | **B1** | **B2** |
|---|---|---|---|---|
| **Nitrogen (N)** | 4.3 | 4.3 | 3.3 | 3.1 |
| **Phosphorus (P)** | 1.7 | 1.6 | 0.5 | 0.5 |
| **Potassium (K)** | 1.5 | 1.4 | 0.6 | 0.6 |
| **Sulfur (S)** | 1.1 | 1.0 | 0.4 | 0.4 |

Economic performance indicators for the crop were calculated. The Gross Income was calculated from a unit priced per cob multiplied by the number of cobs grown per hectare. The Gross Margin for each treatment was then calculated by deducting the cost of fertilizers applied as well as the agrichemicals applied to each treatment. An assumption was made that the labour, machinery, spraying and harvest costs were identical for all treatments. The fertiliser and conventional treatments had one spray application each. Table 21 shows the results of Gross Income, Fertiliser Costs and Gross Margin calculations for the crop.

**Table 21 - Estimated Gross Income, Fertiliser Costs and Gross Margin per Hectare for the Three Treatments**

| | **C1** | **C 2** | **B1** | **B2** |
|---|---|---|---|---|
| **Gross income ($/ha.)** | $29 070 | $29 700 | $30 780 | $32 310 |
| **Fertiliser costs ($/ha.)** | $980 | $980 | $783 | $798 |
| **Gross margin^{a} ($/ha.)** | $28 090 | $28 720 | $29 997 | $31 512 |

| | | | | |
|---|---|---|---|---|
| ^{a} - Calculated by subtracting fertiliser costs from Gross Income. Application labour costs of silicon-containing particles have been excluded. ^{b} - Unit price of $0.45 per cob sale price. Gross Income is unit price multiplied by number of cobs/hectare. | | | | |

Both the B1 and B2 treatments demonstrated higher root weight, increased cob count and brix, increased weight and yield, and far superior Nutrient Use Efficiency. Both B1 and B2 outperformed the Controls despite NPK and S inputs being up to 50% less.

Treatment with particles of the invention seemed to confer greater overall production to the corn. While Yield and Gross margin were significantly improved by the biofertiliser treatment alone, the treatment that included a silicon seed coating using particles of the invention showed the highest gross margin. More specifically, a cost benefit comparison shows that the B1 treatment (biofertiliser inputs minus silicon) increased the net return compared to the controls by $1,592 per hectare, and the B2 treatment (biofertiliser plus 10kg/ha particles of the invention) increased the net return by $3,107 per hectare.

Finally, it is to be understood that various alterations, modifications and/or additions may be introduced into the constructions and arrangements of parts previously described without departing from the spirit or ambit of the invention.

## Claims

1. A method of providing plant available silicon to a plant or plant growth medium, **characterized in that** the method includes applying to the plant or plant growth medium silicon-containing glass powder particles containing amorphous silica having a silica content of at least 50 wt% and a sodium oxide content of at least 5 wt%, wherein at least 90 wt% of the particles have a particle size of less than 37.0 µm.

2. A method according to claim 1, wherein the silicon-containing glass powder particles have a median particle size of from 1 nm to 37.0 µm.

3. A method according to any one of claims 1 to 2, wherein the silicon-containing glass powder particles have a median particle size of from 200 nm to 37.0 µm.

4. A method according to any one of claims 1 to 3, wherein the silicon-containing glass powder particles have a median particle size of from 1 µm to 25.0 µm.

5. A method according to any one of claims 1 to 4, wherein the silicon-containing glass powder particles have a median particle size of from 8.0 µm to 25.0 µm.

6. A method according to any one of claims 1 to 5, wherein at least 50 wt% of the particles have a particle size of less than 20.0 µm.

7. A method according to any one of claims 1 to 6, wherein the silicon-containing glass powder particles have a silica content of at least 60 wt%.

8. A method according to any one of claims 1 to 7, wherein the silicon-containing glass powder particles have a silica content of at least 70 wt%.

9. A method according to any one of claims 1 to 8, wherein the silicon-containing glass powder particles have a sodium oxide content of at least 10 wt%.

10. A method according to any one of claims 1 to 9, wherein the plant growth medium is soil, potting mix, compost, or a soil-less medium as utilised in hydroponic systems.

11. A method according to any one of claims 1 to 10, wherein the particles are applied at a rate of between 1 tonne per hectare and 1000 tonnes per hectare.

12. A method according to any one of claims 1 to 11, wherein the particles are applied at a rate of between 1 kg and 1000 kg per hectare.

## Patentansprüche

1. Verfahren zum Bereitstellen von pflanzenverfügbarem Silizium für eine Pflanze oder ein Pflanzenwachstumsmedium, **dadurch gekennzeichnet, dass** das Verfahren das Aufbringen der siliziumhaltigen Pflanzen- oder Pflanzenwachstumsmediums-Glaspulverteilchen umfasst, die amorphes Siliziumdioxid enthalten, das einen Siliziumdioxidgehalt von mindestens 50 Gew-% und einen Natriumoxidgehalt von mindestens 5 Gew-% hat, wobei mindestens 90 Gew-% der Teilchen eine Teilchengröße von weniger als 37,0 µm haben.

2. Verfahren nach Anspruch 1, wobei die siliziumhaltigen Glaspulverteilchen eine mittlere Teilchengröße von 1 nm bis 37,0 µm haben.

3. Verfahren nach einem der Ansprüche 1 bis 2, wobei die siliziumhaltigen Glaspulverteilchen eine mittlere Teilchengröße von 200 nm bis 37,0 µm haben.

4. Verfahren nach einem der Ansprüche 1 bis 3, wobei die siliziumhaltigen Glaspulverteilchen eine mittlere Teilchengröße von 1 µm bis 25,0 µm haben.

5. Verfahren nach einem der Ansprüche 1 bis 4, wobei die siliziumhaltigen Glaspulverteilchen eine mittlere Teilchengröße von 8,0 µm bis 25,0 µm haben.

6. Verfahren nach einem der Ansprüche 1 bis 5, wobei mindestens 50 Gew-% der Teilchen eine Teilchengröße von weniger als 20,0 µm haben.

7. Verfahren nach einem der Ansprüche 1 bis 6, wobei die siliziumhaltigen Glaspulverteilchen einen Siliziumdioxidgehalt von mindestens 60 Gew-% haben.

8. Verfahren nach einem der Ansprüche 1 bis 7, wobei die siliziumhaltigen Glaspulverteilchen einen Siliziumdioxidgehalt von mindestens 70 Gew-% haben.

9. Verfahren nach einem der Ansprüche 1 bis 8, wobei die siliziumhaltigen Glaspulverteilchen einen Natriumoxidgehalt von mindestens 10 Gew-% haben.

10. Verfahren nach einem der Ansprüche 1 bis 9, wobei das Pflanzenwachstumsmedium Boden, Pflanzenerdemischung, Kompost oder ein erdloses Medium ist, wie es in hydroponischen Systemen verwendet wird.

11. Verfahren nach einem der Ansprüche 1 bis 10, wobei die Teilchen mit einem Betrag zwischen 1 Tonne pro Hektar und 1000 Tonnen pro Hektar aufgetragen werden.

12. Verfahren nach einem der Ansprüche 1 bis 11, wobei die Teilchen mit einem Betrag zwischen 1 kg und 1000 kg pro Hektar aufgetragen werden.

## Revendications

1. Procédé pour fournir du silicium disponible pour une plante à une plante ou à un milieu de croissance d'une plante, **caractérisé en ce que** le procédé comprend l'application, à la plante ou au milieu de croissance de la plante, de particules de poudres de verre contenant du silicium, contenant de la silice amorphe, ayant une teneur en silice d'au moins 50 % en poids et une teneur en oxyde de sodium d'au moins 5 % en poids, dans lequel au moins 90 % en poids des particules ont une granulométrie inférieure à 37,0 µm.

2. Procédé selon la revendication 1, dans lequel les particules de poudre de verre contenant du silicium ont une granulométrie médiane de 1 nm à 37,0 µm.

3. Procédé selon l'une quelconque des revendications 1 à 2, dans lequel les particules de poudre de verre contenant du silicium ont une granulométrie médiane de 200 nm à 37,0 µm.

4. Procédé selon l'une quelconque des revendications 1 à 3, dans lequel les particules de poudre de verre contenant du silicium ont une granulométrie médiane de 1 µm à 25,0 µm.

5. Procédé selon l'une quelconque des revendications 1 à 4, dans lequel les particules de poudre de verre contenant du silicium ont une granulométrie médiane de 8,0 µm à 25,0 µm.

6. Procédé selon l'une quelconque des revendications 1 à 5, dans lequel au moins 50 % en poids des particules ont une granulométrie inférieure à 20,0 µm.

7. Procédé selon l'une quelconque des revendications 1 à 6, dans lequel les particules de poudre de verre contenant du silicium ont une teneur en silice d'au moins 60 % en poids.

8. Procédé selon l'une quelconque des revendications 1 à 7, dans lequel les particules de poudre de verre contenant du silicium ont une teneur en silice d'au moins 70 % en poids.

9. Procédé selon l'une quelconque des revendications 1 à 8, dans lequel les particules de poudre de verre contenant du silicium ont une teneur en oxyde de sodium d'au moins 10 % en poids.

10. Procédé selon l'une quelconque des revendications 1 à 9, dans lequel le milieu de croissance d'une plante est un sol, un mélange de rempotage, un compost, ou un milieu sans sol tel que celui utilisé dans les systèmes hydroponiques.

11. Procédé selon l'une quelconque des revendications 1 à 10, dans lequel les particules sont appliquées à un taux compris entre 1 tonne par hectare et 1000 tonnes par hectare.

12. Procédé selon l'une quelconque des revendications 1 à 11, dans lequel les particules sont appliquées à un taux compris entre 1 kg et 1000 kg par hectare.
